# EUROPEAN PATENT SPECIFICATION

(11) **EP 4 617 210 B1**
(45) Date of publication and mention of the grant of the patent: **25.11.2026**
(21) Application number: 25163220.4
(22) Date of filing: 12.03.2025
(51) Int. Cl.: B65G 57/00, B65G 57/04, B65G 61/00

(54) **METHOD AND APPARATUS FOR HANDLING PACKAGING MATERIALS**
VERFAHREN UND VORRICHTUNG ZUR HANDHABUNG VON VERPACKUNGSMATERIALIEN
PROCÉDÉ ET APPAREIL DE MANUTENTION DE MATÉRIAUX D'EMBALLAGE

(30) Priority: 15.03.2024 IT 202400005860
(43) Date of publication of application: 17.09.2025
(73) Proprietor: Ercopac S.r.l., 42019 Scandiano (RE) (IT)
(72) Inventor: GRASSI, Antonio, BAISO (RE) (IT)
(74) Representative: Silva, Valentina

(56) References cited:
- EP-B1- 3 681 828
- CN-U- 207 127 907
- US-A1- 2019 127 157
- SMI S.P.A.: "APS 1550 P palletizer", YOUTUBE, 4 February 2016 (2016-02-04), pages 1 - 6, XP054978366, Retrieved from the Internet <URL:https://www.youtube.com/watch?v=BPU_A_n2aNI> [retrieved on 20180524]

## Description

### FIELD OF APPLICATION OF THE INVENTION

The present invention relates to the field of forming a palletised load, i.e. pallets of articles. In particular, it relates to an apparatus and method for taking and handling a plurality of packaging materials, especially for overlapping pallets of articles.

### STATE OF THE ART

Packaging plants, e.g. in the paper or cosmetics industry or in the bottling industry, form palletised loads consisting of several layers of articles, such as packages, or containers.

Palletised load or pallet of articles mean a plurality of products preferably arranged in layers on a base also known as a platform, generally made of wood or plastic. Between each layer there may be an insert or separator, for example a flap or tray or cap, made of plastic or cardboard that helps the stability of the pallet. It is also possible for said insert or separator to be positioned between the platform and the load.

Said pallet is stored and moved between the production plants and those for subsequent treatment or storage or distribution. In order to optimise space management and handling, pallets of articles can be overlapped, especially in the case of lightweight, non-fragile articles, which do not get damaged by being overlapped.

For example, overlapping pallets is very common in the toilet paper industry where pallets are low and light.

Therefore, after a pallet of articles has been formed, a platform is placed on top of said pallet to form overlapping layers of articles in order to form the second overlapping pallet.

In order to guarantee the integrity of the articles and the stability of the two pallets, a sandwich of packaging materials is generally placed between the last layer of the first pallet and the first layer of the second pallet, i.e. at least three packaging materials, preferably a separator, a platform and a separator are overlapped.

The separator positioned above the last layer of the first pallet protects the articles of said last layer, so that the platform that is placed on top of it is not in direct contact with the articles, while the second separator positioned above the platform gives more stability to the first layer of articles of the second pallet.

They are known palletising machines which comprise one or more apparatuses for taking and handling packaging materials. Said machines generally comprise different apparatuses depending on the type of packaging material.

For example, they comprise apparatuses provided with equipment for taking and handling inserts or separators and apparatuses provided with equipment for taking and handling platforms or bases.

There are also apparatuses equipped to handle different packaging materials such as separators and platforms.

Said known apparatuses capable of treating different materials, are however configured to handle only one packaging material at a time, or at most two.

Therefore, in order to handle an overlap of at least three packing materials, such as the sandwich described above, several apparatuses must be used.

Alternatively, it is possible to use a single apparatus that performs a plurality of pick-up and deposit cycles as it carries out a pick-up and deposit cycle for each single material.

In the first case, machine costs are high, but the machine achieves a good production speed, while in the second case, machine costs are lower, but the machine production speed is reduced. The features of the preamble of claim 1 are disclosed in URL: https://www.youtube.com/watch?v=BPU_A_n2aNI [retrieved on 2018-05-24].

### EXPOSURE AND ADVANTAGES OF THE INVENTION

The technical problem underlying the present invention is to make available an apparatus and an associated method for handling packaging materials structurally and functionally designed to overcome one or more of the limits set forth above with reference to the known prior art.

In the context of the aforementioned problem, a main object of the invention is to develop an apparatus and associated method for handling packaging materials that makes it possible to optimise the cycles of gripping and depositing packaging materials thus obtaining a machine with a high production rate.

An object of the invention is also to make available to the art a cost-effective apparatus and associated method for handling packaging materials.

A further object of the invention is also to make available to the art an apparatus and associated method for handling packaging materials in the context of a simple rational solution that optimises the management of machine layout spaces.

In particular, the present invention makes available a method for forming a pallet of articles and/or for overlapping pallets of articles.

In particular, said method provides handling packaging materials.

In particular, said packaging materials comprise at least one insert or separator layer and at least one base or platform per pallet.

Preferably, said method provides arranging a first separator, a base, and a second separator in an overlapping manner, taking them from one or more storage areas and handling them together as overlapped to a storage area.

Preferably, the method provides taking a first separator from a separator storage area, bringing it to a platform storage area and preferably placing it as resting on the platform.

Preferably, the method then provides taking said platform together with the first separator and bringing them to the separator storage area.

Preferably, the method then provides taking a second separator, placed underneath the platform.

Preferably, the method provides transferring said overlapped first separator, platform and second separator to a depot area.

Advantageously, the method provides blocking the first separator on the platform, so as to prevent it from moving relative to the platform.

In particular, the present invention also makes available an apparatus for forming a pallet of articles and/or for overlapping pallets of articles.

Preferably said apparatus is configured for handling packaging materials.

In particular, said packaging materials comprise at least one insert or separator layer and at least one base or platform per pallet.

Preferably said apparatus comprises a handling device on which a gripping head is installed.

This gripping head comprises gripping and releasing means for arranging a first separator, a base and a second separator in an overlapping manner, taking them from one or more storage areas and handling them together to a depot area.

Preferably the gripping and releasing means comprise base gripping and releasing means.

Preferably the gripping and releasing means comprise separator gripping and releasing means.

Preferably, the base gripping and releasing means are movable between a base gripping position and a base releasing position, preferably by translation.

Preferably, the base gripping and releasing means comprise at least one pair of coupling elements opposite and movable between the base gripping position moving closer to each other and the base releasing position moving away from each other.

Preferably the separator gripping and releasing means comprise a plurality of suction elements, preferably suction cups.

Preferably the separator gripping and releasing means are movable between an operating position, wherein they hold the separator, and a cleared position reached once the separator has been released.

Preferably the separator gripping and releasing are movable between the operating position and the cleared position by rotation.

Preferably the separator gripping and releasing means comprise arms, on which the suction elements are mechanically installed.

Preferably when the separator gripping and releasing means are in the operating position, the suction elements are underneath the base gripping and releasing means.

Preferably when the separator gripping and releasing means are in the cleared position, the suction elements are above the base gripping and releasing means.

Preferably, the gripping head comprises blocking means adapted to block the separator layer positioned on the base, preferably by pressure.

Preferably, the gripping head (110) comprises holding elements adapted to block the translation of the base relative to the base gripping and releasing means.

Preferably the handling device on which the gripping head is installed is configured to at least lift said gripping head in a vertical direction and translate it in a horizontal direction.

These and other objects are reached by the characteristics of the invention as set forth in the independent claims. The dependent claims outline preferred and/or particularly advantageous aspects of the invention.

Said objects and advantages are all achieved by the apparatus and associated method for handling packaging materials, the subject matter of the present invention, which is characterised by the following claims.

### BRIEF DESCRIPTION OF THE DRAWINGS

This and other features will become more apparent from the following description of some preferred embodiments shown by way of non-limiting example in the accompanying drawings.
- Figure 1: shows an axonometric view of the apparatus for handling packaging materials;

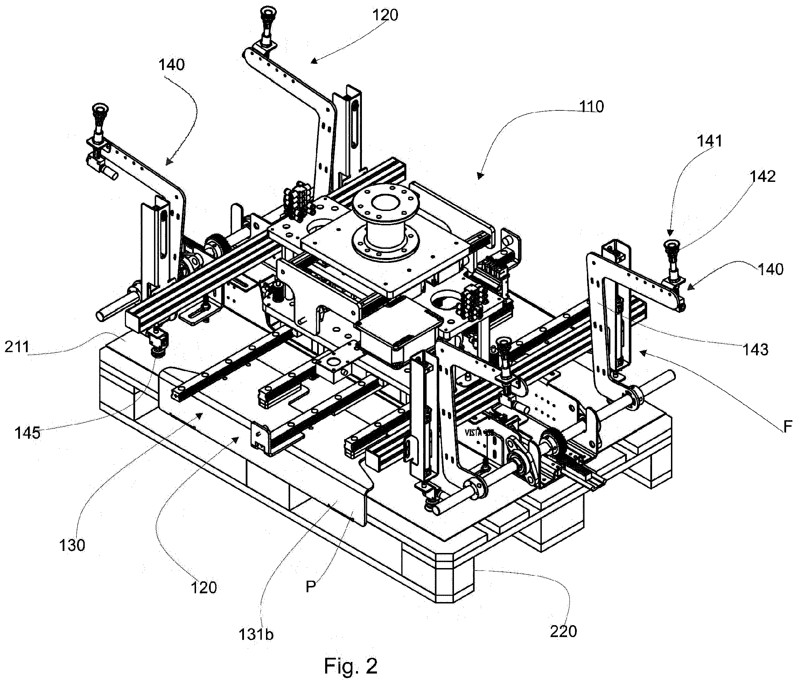

- Figure 2: shows an axonometric view of the gripping head in a working position;

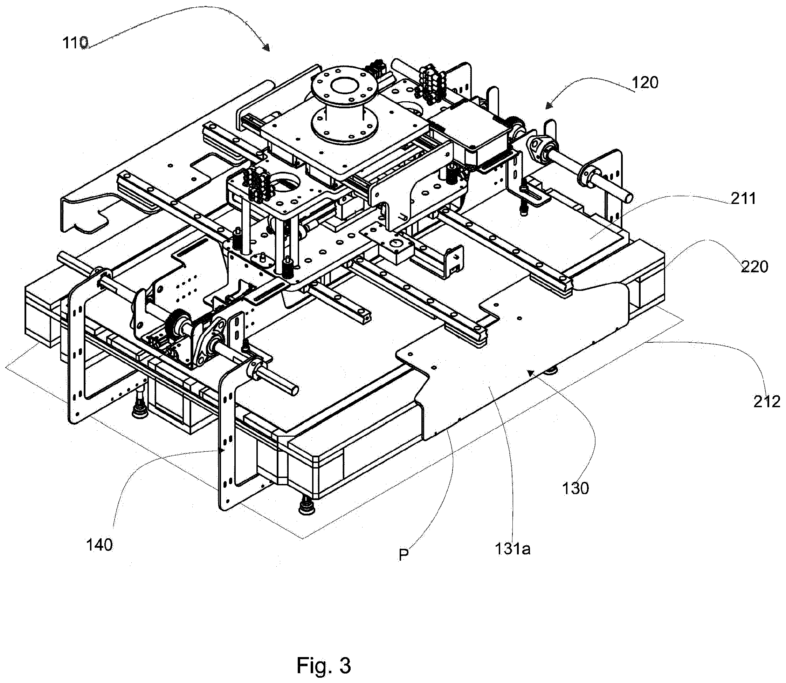

- Figure 3: shows an axonometric view of the gripping head in a different working position;
- Figure 4: shows a side view of the gripping head;
- Figure 5: shows a different side view of the gripping head;

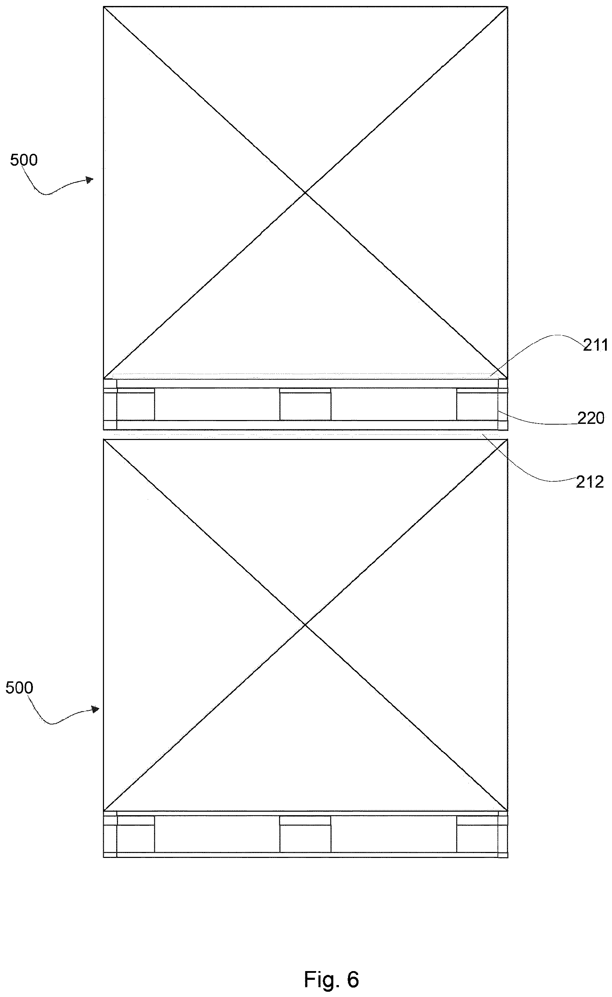

- Figure 6: shows a side view of two overlapped pallets with the packaging materials interposed between them;
- Figure 7: shows a side view of the apparatus in the step of gripping the first separator;
- Figure 8: shows a side view of the apparatus in the step of depositing the first separator on the platform;
- Figure 9: shows a side view of the apparatus in the step of gripping the platform;
- Figure 10: shows a side view of the apparatus in the step of transferring the first separator and the platform;
- Figure 11: shows a side view of the apparatus in the step of gripping the second separator;
- Figure 12: shows a side view of the apparatus in the step of depositing the second separator on the pallet;
- Figure 13: shows a side view of the apparatus in the step of depositing the platform and the first separator on the pallet;
- Figure 14: shows a side view of the apparatus in the step of moving away from the pallet head.

### DESCRIPTION OF THE INVENTION

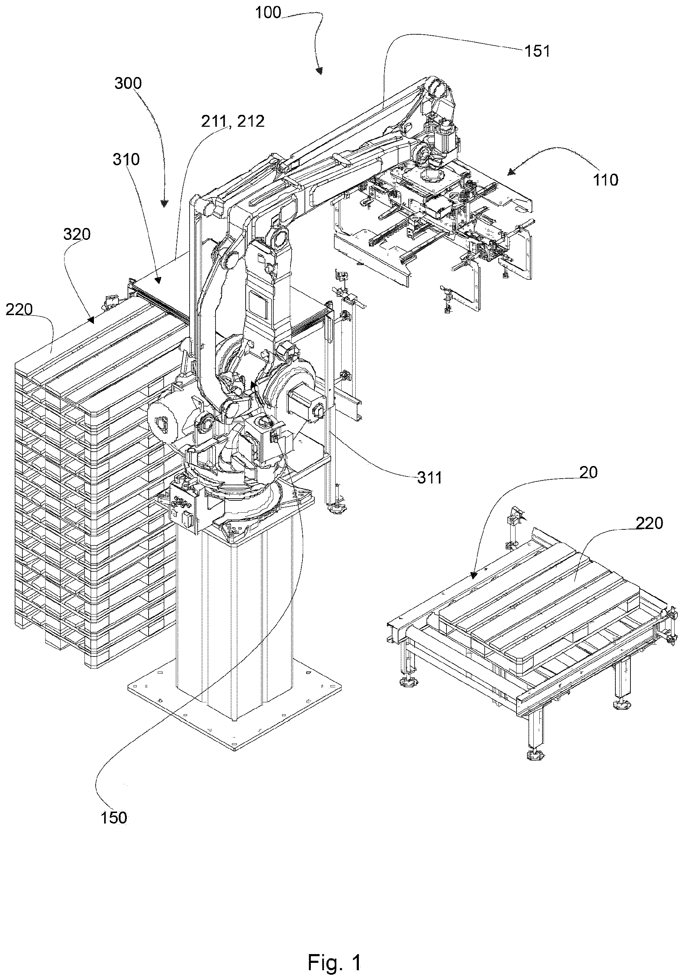

Figure 1 shows an apparatus 100 for handling packaging materials 211, 212, 220 to form a pallet 500 of articles.

Preferably said pallet 500 is obtained by overlapping one or more pallets 500.

The pallet 500 may have various approximate dimensions, generally ranging from 600x800mm up to 1120x1420mm and heights generally up to 3000mm.

The apparatus 100, described hereinafter, is capable of working with packaging materials 211, 212, 220 of various sizes to form pallets 500 preferably with the dimensions described above.

Packaging materials can be separators 211, 212, and bases 220.

The separators 211, 212, can be flaps, and/or trays and/or caps.

The bases 220 can be wooden or plastic platforms, for example.

The Figure shows an apparatus 100 which comprises storage areas 300 for storing packaging materials 200 comprising at least one separator storage area 310 and one platform storage area 320.

In the separator storage area 310, there may be a separator warehouse 311 adapted to contain a plurality of separators 211, 212 holding them in the correct position to be taken.

Inside the separators warehouse 311 said separators 211, 212, are generally arranged as overlapped in order to form a stack.

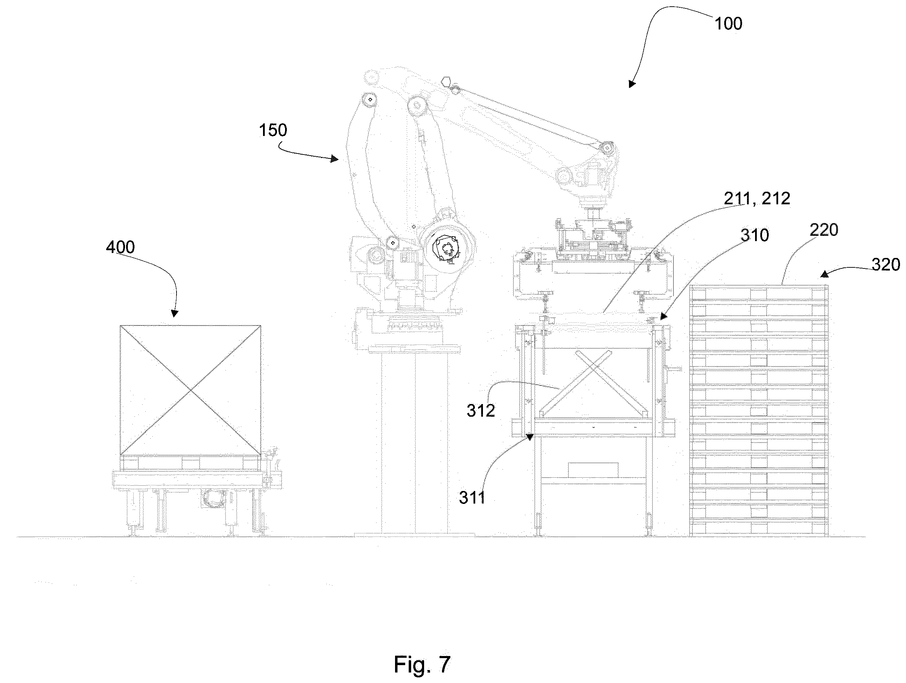

As shown in Figure 7, the separator warehouse 311 can comprise lifting means 312 for lifting the stack by bringing the separator 211, 212, to be taken to a suitable position.

In the platform storage area 320, there may be a platform warehouse 321 adapted to contain a plurality of platforms 220 holding them in the correct position to be taken.

Inside the platform warehouse 321 said platforms 220 are generally arranged as overlapped to form a stack.

Alternatively, the platform storage area 320 may comprise a pick-up station with a single platform.

We will not go into the details of platform warehouses 321 and separator warehouses 311 as they are known to a person skilled in the art.

The Figure also shows a depot area 400 of said packaging materials 211, 212, 220 at the pallet 500 that can be placed on conveyors 20 to be handled.

According to a preferred embodiment, the apparatus 100 comprises a handling device 150 on which a gripping head 110 is installed.

Said handling device 150 is configured to bring the gripping head 110 to the various operating positions, i.e. the storage areas 300 for gripping packaging materials 211, 212, 220 and the depot areas 400 for depositing packaging materials 211, 212, 220.

Said handling device 150 provides moving the gripping head 110 at least in a vertical direction and in a horizontal direction to reach the separator storage area 310, the platform storage area 320 and the depot area 400.

The Figures also show a preferred embodiment of the handling device 150 comprising a robot 151, in particular, an anthropomorphic one.

An anthropomorphic robot is defined as an automatically controlled, programmable system consisting of three or more axes.

Two types of robots are generally distinguished: Cartesian robots and anthropomorphic robots.

The Cartesian system is a linear robot moving on three orthogonal axes, according to Cartesian data and consists of a series of linear actuators.

An anthropomorphic robot moves in a three-dimensional environment thanks to rotoid joints.

An anthropomorphic robot 151 can comprise three or more axes, e.g. a 4-axis robot 151 is shown in the figure.

According to a preferred embodiment, the gripping head 110 comprises gripping and releasing means 120 to arrange a first separator 211, a base 220, and a second separator 212 in an overlapping manner, taking them from one or more storage areas 300 and handling them together to a storage area 400.

Thanks to this solution, it is possible to perform only one simultaneous deposit cycle for all the packaging materials without having to perform a deposit cycle for each individual material. This speeds up the working cycle of the apparatus by increasing the production rate.

According to an aspect of the invention, the gripping and releasing means 120 comprise base gripping and releasing means 130.

Said base gripping and releasing means 130 are specifically designed to take, hold and release the base 130.

Said base gripping and releasing means 130 are preferably configured to take the base 220, but not the separators 210.

Said base gripping and releasing means 130 are described below.

Further preferably the gripping and releasing means 120, comprise separator gripping and releasing means 140.

Said separator gripping and releasing means 140 are preferably configured to take the separators 211, 212, but not the base 220.

Said separator gripping and releasing means 140 may be the same as those gripping both the first separator 211 and the second separator 212.

Alternatively, there may be different separator gripping and releasing means 140, one type of which is intended for gripping and releasing the first separator 211, and a different type intended for gripping and releasing the second separator 212. A preferred embodiment shown in the figure provides that the base gripping and releasing means 130 may be movable between a base gripping position P and a base releasing position R.

The transition from the base gripping position P to the base releasing position R is preferably by translation.

Said translation can preferably be made by means of electric or pneumatic actuators.

In particular, the base gripping and releasing means 130, comprise at least one pair of coupling elements 131a, 131b opposite and movable between the base gripping position P moving closer to each other and the base releasing position R moving away from each other.

When the base 220 is a wooden platform, said pair of coupling elements 131a, 131b, is preferably configured to be inserted between the upper boards 221 and lower boards 222 of the base 220, when they are in the base gripping position P.

This makes it possible to hold the platform 220 not only by friction, but also thanks to the support of the pair of coupling elements 131a, 131b on which the upper boards 221 of the platform 220 rest, when it is held by the head 110 and raised relative to the stack in the platform storage area 320.

As shown in the figure, said pair of coupling elements 131a, 131b extends horizontally and is formed by a horizontal portion of folded metal sheet 135.

Advantageously, said base gripping and releasing means 130 may further comprise holding elements 132a, 132b.

Said holding elements 132a, 132b engage on opposite sides of the base 220 which are preferably the same sides on which the coupling elements 131a, 131b are located.

Advantageously, said holding elements 132a, 132b are movable between the base gripping position P moving closer to each other and the base releasing position R moving away from each other.

Thanks to said holding elements 132a, 132b, it is possible to block the base 220 preventing it from possibly moving within the head 110 in particular relative to the base gripping and releasing means 130 and especially during movements of the head 110 from the storage areas 300 to the depot areas 400.

As shown in the figure, a possible embodiment provides that said pair of holding elements 132a, 132b extends vertically and is made by means of a vertical portion of the folded metal sheet 135.

The folded metal sheet 135 advantageously defines with its horizontal portion the coupling elements 131a, 131b and with its vertical portion the holding elements 132a, 132b.

A preferred embodiment provides that the separator gripping and releasing means 140 comprise a plurality of suction elements 141.

Thanks to this solution, the separator 211, 212, is taken in such a way that its integrity is guaranteed.

Preferably said suction elements 141, can be suction cups 142.

Thanks to this solution, it is possible to adapt the grip to any unevenness of the stack of separators 211, 212 to be taken.

One possible embodiment shown in the figure provides that the separator gripping and releasing means 140 comprise arms 143, on which the suction elements 141 are mechanically installed.

Preferably said separator gripping and releasing means 140, are movable between an operating position O in which they hold the separator 211, 212, and a cleared position F once the separator 211, 212 has been released.

Said cleared position F provides at least to bring the separator gripping and releasing means 140 in a position such that they are not underneath the base 220 held by the head 110, and preferably in a position such that they are not underneath the base gripping and releasing means 130.

Preferably when the separator gripping and releasing means 140 are in the cleared position F, the suction elements 141 are above the base gripping and releasing means 130.

Preferably the separator gripping and releasing means 140 are movable between the operating position O and the cleared position F, by rotation.

Said rotation may preferably be carried out by means of electric or pneumatic actuators.

In particular, the arms 143, on which the suction elements 141 are mechanically installed, are configured to perform a rotation of at least a few degrees in order to move from the operating position O to the cleared position F.

In particular in the figure, the arms 143, on which the suction elements 141 are mechanically installed, perform a 180° rotation to move from the operating position O to the cleared position F.

Thanks to this rotation, the lateral dimensions of the head 110 are reduced so as not to limit the movements and interaction with storage areas 300 and depot areas 400.

According to an aspect of the invention, when the separator gripping and releasing means 140 are in the operating position O, the suction elements 141 are positioned underneath the base gripping and releasing means 130.

This makes it possible to take the separator 211, 212 when the head 110 is already gripping the base 220 .

Preferably the separator gripping and releasing means 140 are arranged at opposite sides of the base 220.

In particular, said sides are those adjacent to those on which the base gripping and releasing means 130 are located.

Advantageously, the gripping head 110 comprises blocking means 145 adapted to block the separator layer 211, 212, positioned on the base 220, preferably by pressure.

Thanks to said blocking means 145 it is possible to block the first separator layer 211 on the base 220 preventing it from moving within the head 110 and especially during the movement of the head 110 from the storage areas 300 to the depot areas 400.

This ensures that the overlap between the first separator 211, and base 220 is and remains substantially centred.

Preferably, said blocking means 145 block the first separator layer 211 on the base 220 by exerting a pressure on the first separator layer 211 towards the base 220.

Said blocking means 145 may comprise an engagement end 146 contacting the first separator 211.

In a possible embodiment, the engagement end 146 of said blocking means 145 is movable in a vertical direction.

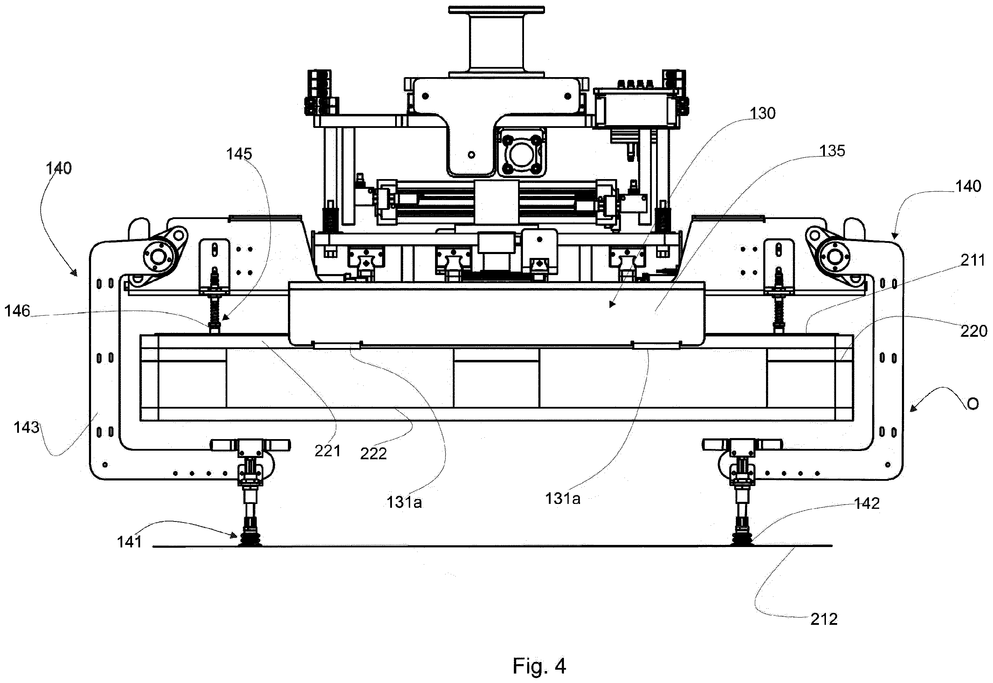

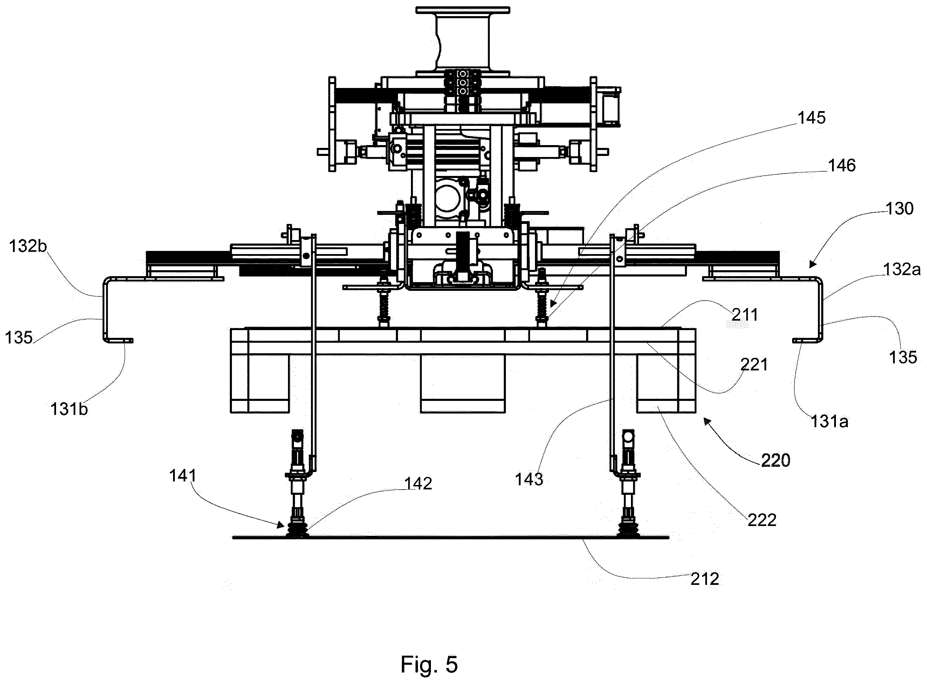

Said movement may not be controlled, but generated by the weight of the engagement end 146, or as shown in Figures 4 and 5, generated by the presence of a pushing element such as a spring which tends to push the engagement end 146 downwards until it contacts the first separator 211 resting on the base 220.

In this case, the pressure exerted by the blocking means 145 is due to the weight or force expressed by the spring.

Alternatively, the movement can be controlled by actuators such as pneumatic ones.

In this case, the pressure exerted by the blocking means 145 is a function of the force of the actuators controlling them.

According to an advantageous embodiment, said engagement ends 146 may comprise a suction cup holding by suction the first separator 211 resting on the base 220. Said blocking means 145 with engagement ends 146 provided with suction cup may also be used for gripping the first separator 211 as an alternative to using the suction elements 141 of the separator gripping and releasing means 140.

The invention relates to a working method which optimises the time for picking up and depositing a plurality of packaging materials.

Said method provides handling packaging materials 211, 212, 220, comprising at least one insert or separator layer 211, 212 and at least one base or platform 220 per pallet 500.

Preferably, said method provides arranging a first separator 211, a base 220, and a second separator 212 in an overlapping manner, taking them from one or more storage areas 300 and handling them together as overlapped to a depot area 400.

In particular, said method provides taking a first separator 211 from a separator storage area 310 and bringing it to a platform storage area 320 and preferably placing it on the platform 220.

It is therefore provided to take said platform 220 together with the first separator 210.

Said platform 220 together with the first separator 211 are brought to the separator storage area 310, where a second separator 212 is taken.

Said first separator 211, platform 220 and second separator 212 arranged overlapped on each other are transferred together to a depot area 400.

Said method preferably provides blocking the first separator 211 on the platform 220, so as to prevent it from moving relative to the platform 220 itself.

An example of the operating method of the apparatus 100 is shown in Figures 7 to 14 and provides to:
- position the gripping head 110 installed on the handling device 150 above the separator storage area 310,
- take a first separator 211 by means of the separator gripping and releasing means 140, as shown in Figure 7.

In particular, the action of taking occurs by activating the suction elements 141.

In particular, the action of taking occurs with the arms 143, which are in the operating position O in which, by means of the suction elements 141, they hold the separator 210 underneath the base gripping and releasing means 130.

Optionally, the first separator 211 may be taken by means of the blocking means 145 in the configuration with engagement end 146 provided with suction cup.

In this case, the arms 143 of the separator gripping and releasing means 140, remain in the cleared position F.

This solution may be advantageous when, in order to take the first separator 211 or the base 220, it is necessary to reach a high height that is not always otherwise achievable by the handling means 150.

Once the first separator 211 has been taken, the handling device 150 positions the gripping head 110 above the platform storage area 320.

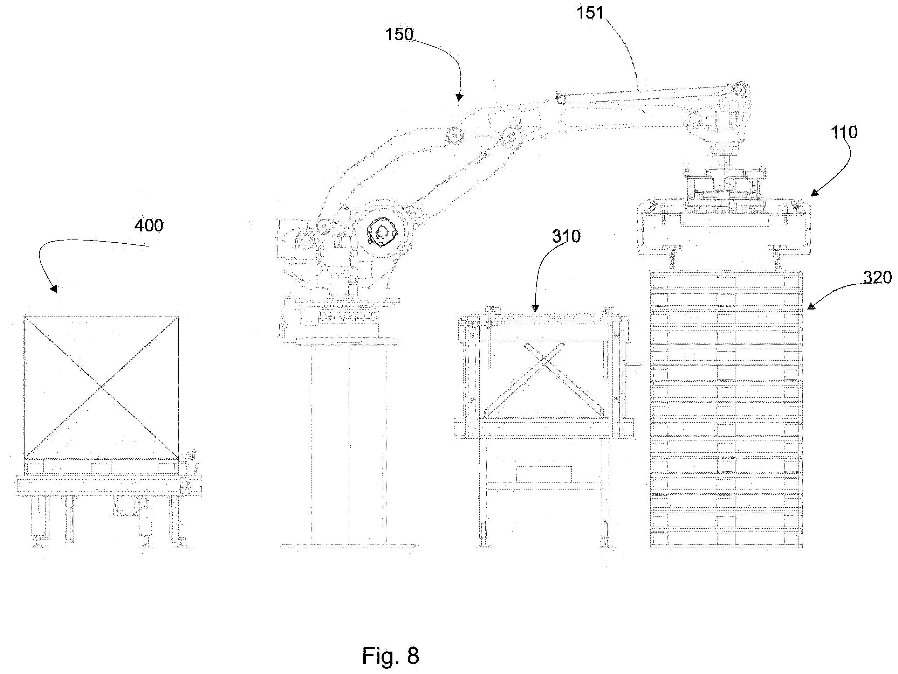

The suction elements 141 release the first separator 211 as resting on the upper platform 220 to be taken, for example the platform 220 on top of the storage stack, as shown in Figure 8.

The method provides rotating the arms 143, preferably by 180° to move from the operating position O to the cleared position F.

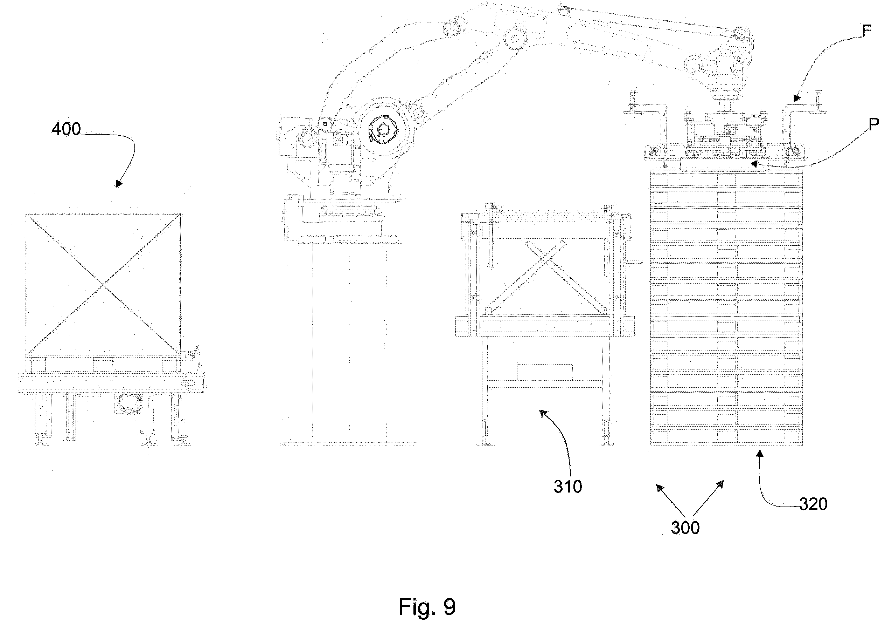

Alternatively, the blocking means 145 in the configuration with engagement end 146 provided with suction cup release the first separator 211 as resting on the platform 220 to be taken. The head 110 descends bringing the base gripping and releasing means 130 to a height suitable for taking the platform 220, as shown in Figure 9.

During this descent, the engagement ends 146 of the blocking means 145 come into contact with the first separator 211, pressing it onto the base 220. The base gripping and releasing means 130 move to the base gripping position P, so that the pair of opposite coupling elements 131a, 131b is inserted between the upper boards 221 and lower boards 222 of the base 220.

The handling device 150 lifts the head 110 from the stack of platforms 220 and brings said head 110 above the separator storage area 310.

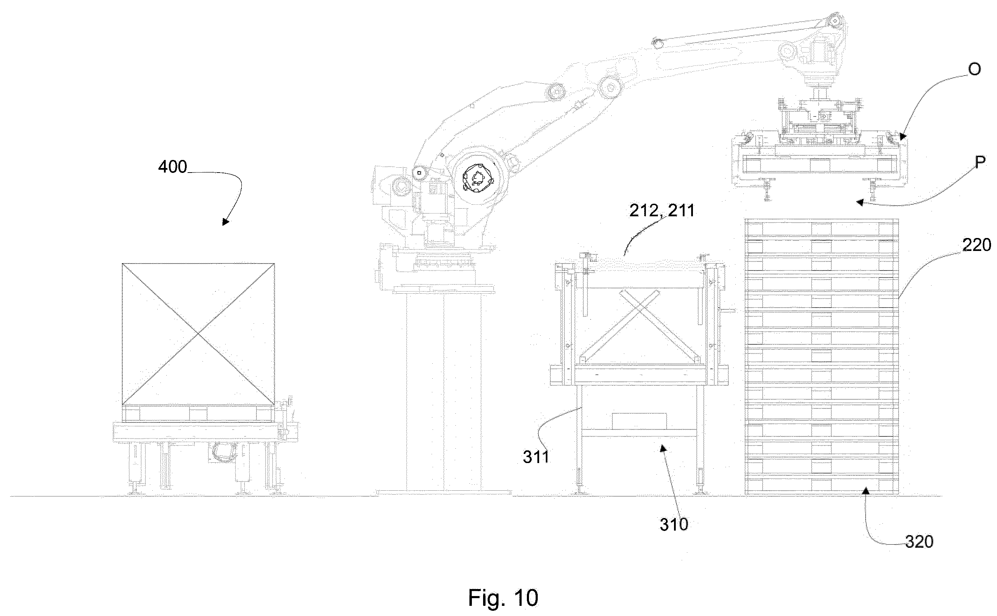

During this movement, the arms 143 rotate by 180° to move from the cleared position F to the operating position O, with the suction elements 141 underneath the platform 220 as shown in Figure 10.

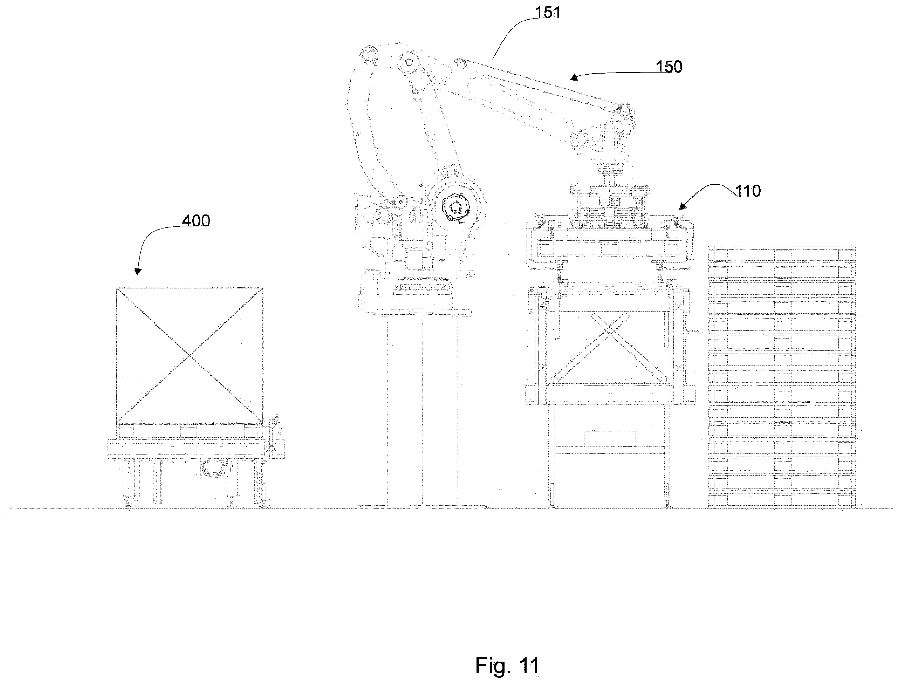

The operating method provides positioning the gripping head 110 above the separator storage area 310, as shown in Figure 11, and taking the second separator 212 by activating the suction elements 141.

In particular the action of taking occurs with the arms 143, which are in the operating position O in which, by means of the suction elements 141, they hold the separator 212 underneath the base 220.

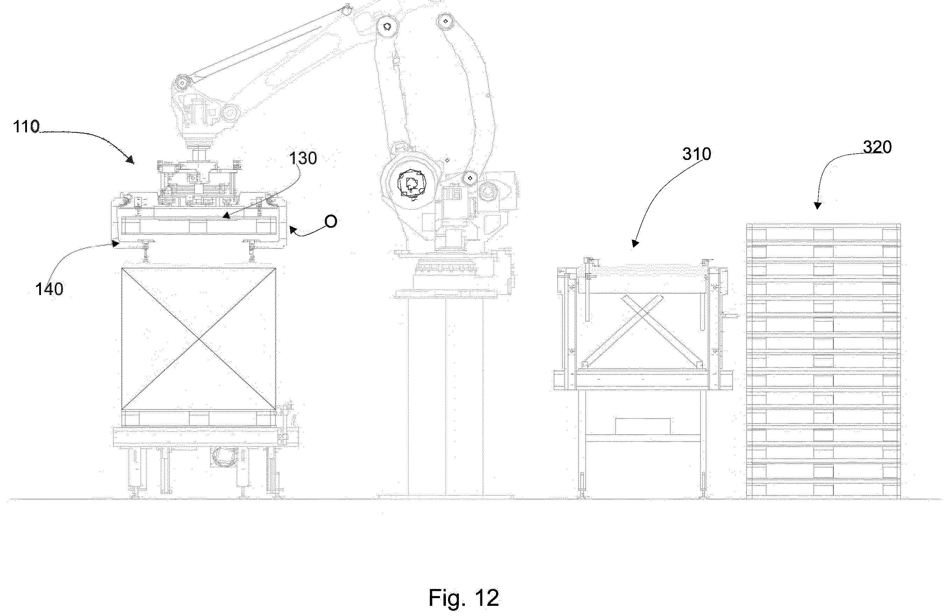

Once the three packaging materials 211, 212 220 are held by the gripping head 110, the handling device 150 positions the gripping head 110 above the depot area 400, so that the second separator 212 is near the top of the pallet 500, as shown in Figure 12.

The suction elements 141 are deactivated to release the second separator 212 on top of the pallet 500.

The arms 143, rotate by 180° to move from the operating position O to the cleared position F.

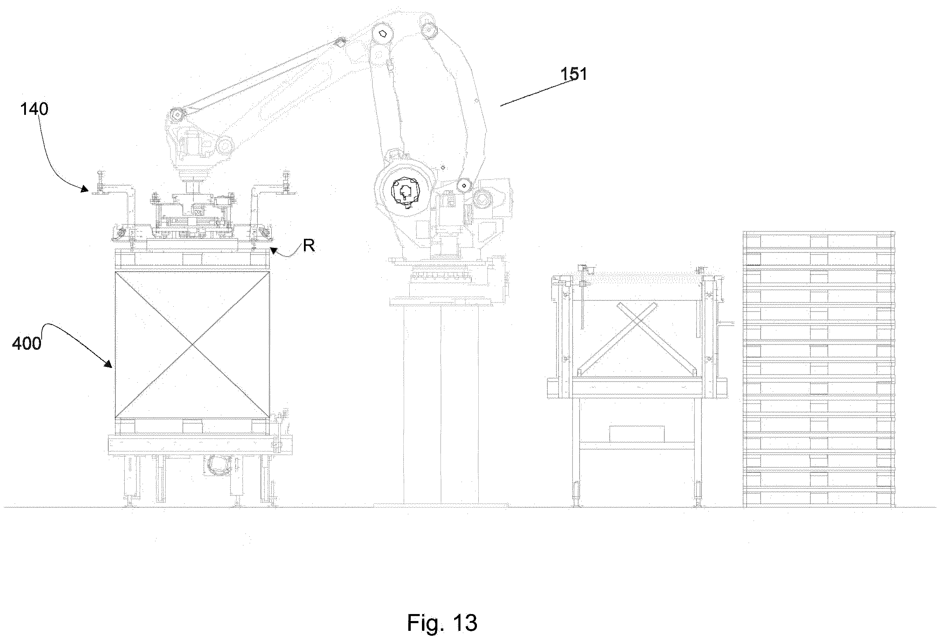

The handling device 150 lowers the head 110 so that the base 220 is close to or in contact with the second separator 212 that has just been deposited, as shown in Figure 13.

The base gripping and releasing means 130 translate to the base releasing position R, so that the pair of opposite coupling elements 131a, 131b disengage from the upper boards 221 and lower boards 222 of the base 220.

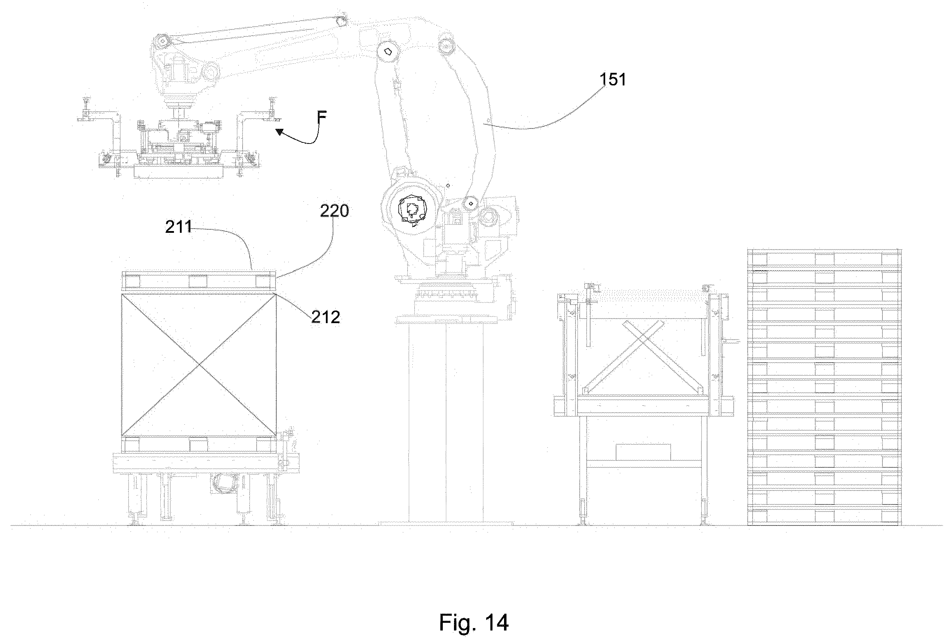

The handling device 150 lifts the head, as shown in Figure 14, and can restart the described operating cycle.

With this cycle, the three packaging materials 220, i.e. the first separator 211, the base 220 and the second separator 212 are deposited without having to move the head 110, except in a vertical direction to move closer to the depot.

Therefore, the handling device 150, having reached the depot area 400, deposits the sandwich of packaging materials 220 without moving from said area.

It is understood however that what is described above is given for exemplary and non-limiting purposes, therefore, possible variants of detail that may be required for technical and/or functional reasons are considered from now falling within the same protective scope defined by the claims indicated below.

## Claims

1. Method for making a pallet (500) of articles and/or for overlapping pallets (500) of articles, which provides handling packaging materials (211, 212, 220), comprising at least one insert or separator layer (210) and at least one base or platform (220) per pallet (500), wherein
said method comprises arranging a first separator (211), a base (220), and a second separator (212) in an overlapping manner, taking them from one or more storage areas (300) and handling them together as overlapped to a depot area (400).

2. Method according to claim 1, which provides taking a first separator (211) from a separator storage area (310), bringing it to a platform storage area (320) and preferably placing it as resting on the platform (220), then taking said platform (220) together with said first separator (210) and bringing them to the separator storage area (310), taking a second separator (212) placed underneath the platform (220), transferring said overlapped first separator (211), platform (220) and second separator (212) to a depot area (400).

3. Method according to any one of the preceding claims, which provides blocking the first separator (211) on the platform (220), so as to prevent it from moving relative to the platform (220) itself.

4. Apparatus (100) for implementing the method according to claim 1, for making a pallet (500) of articles and/or for overlapping pallets (500) of articles, said apparatus (100) configured for handling packaging materials (211, 212, 220), in particular said packaging materials (211, 212, 220) comprising at least one insert or separator layer (210) and at least one base or platform (220) per pallet (500), wherein said apparatus (100) comprises a handling device (150) on which a gripping head (110) is installed **characterized in that** said gripping head (110) comprises gripping and releasing means (120) for arranging a first separator (211), a base (220), and a second separator (212) in an overlapped manner, taking them from one or more storage areas (300) and handling them together to a depot area (400).

5. Apparatus (100) according to claim 4, wherein the gripping and releasing means (120) comprise base gripping and releasing means (130).

6. Apparatus (100) according to any one of claims 4 to 5, wherein the gripping and releasing means (120) comprise separator gripping and releasing means (140).

7. Apparatus (100) according to any one of claims 5 to 6, wherein the base gripping and releasing means (130), are movable between a base gripping position (P) and a base releasing position (R) preferably by translation.

8. Apparatus (100) according to any one of claims 5 to 7, wherein the base gripping and releasing means (130), comprise at least one pair of coupling elements (131a, 131b) opposite and movable between the base gripping position (P) moving closer to each other and the base releasing position (R) moving away from each other.

9. Apparatus (100) according to any one of claims 6 to 8, wherein the separator gripping and releasing means (140) comprise a plurality of suction elements (141), preferably suction cups (142).

10. Apparatus (100) according to any one of claims 6 to 9, wherein the separator gripping and releasing means (140), are movable between an operating position (O) wherein they hold the separator (210) and a cleared position (F) once the separator (210) is released preferably by rotation.

11. Apparatus (100) according to any one of claims 6 to 10, wherein the separator gripping and releasing means (140) comprise arms (143), on which suction elements (141) are mechanically installed.

12. Apparatus (100) according to any one of claims 6 to 11, wherein, when the separator gripping and releasing means (140) are in the operating position (O), the suction elements (141), are below the base gripping and releasing means (130).

13. Apparatus (100) according to any one of claims 6 to 12, wherein, when the separator gripping and releasing means (140), are in the cleared position (F) the suction elements (141), are above the base gripping and releasing means (130).

14. Apparatus (100) according to any one of claims 4 to 13, wherein, the gripping head (110) comprises blocking means (145) adapted to block the separator layer (210) positioned on the base (220), preferably by means of pressure, and preferably comprises holding elements (132a, 132b) adapted to block the translation of the base (220) relative to the base gripping and releasing means (130).

15. Apparatus (100) according to any one of claims 4 to 14, wherein the handling device (150) on which the gripping head (110) is installed is configured to at least lift in a vertical direction and translate in a horizontal direction said gripping head (110).

## Patentansprüche

1. Verfahren zur Herstellung einer Palette (500) mit Artikeln und/oder zur Überlappung von Paletten (500) mit Artikeln, das die Handhabung von Verpackungsmaterialien (211, 212, 220) vorsieht, mit mindestens einer Einlege- oder Trennschicht (210) und mindestens einer Basis oder Plattform (220) pro Palette (500),
wobei das Verfahren das Anordnen eines ersten Trennmittels (211), einer Basis (220) und eines zweiten Trennmittels (212) in überlappender Weise, deren Entnahme aus einem oder mehreren Lagerbereichen (300) und deren gemeinsame Handhabung in überlappender Weise zu einem Depotbereich (400) umfasst.

2. Verfahren nach Anspruch 1, welches die Entnahme eines ersten Trennmittels (211) aus einem Lagerbereich (310) des Trennmittels, Transport zu einem Plattformlagerbereich (320) und vorzugsweise Platzierung desselben mit Auflage auf der Plattform (220), anschließende Entnahme der Plattform (220) zusammen mit dem ersten Trennmittels (210) und Transport zum Lagerbereich (310) des Trennmittels, Entnahme eines unter der Plattform (220) platzierten zweiten Trennmittels (212) und Überführung des überlappenden ersten Trennmittels (211), der Plattform (220) und des zweiten Trennmittels (212) zu einem Depotbereich (400), vorsieht.

3. Verfahren nach einem der vorhergehenden Ansprüche, welches das Blockieren des ersten Trennelements (211) auf der Plattform (220) vorsieht, um dessen Bewegung relativ zur Plattform (220) selbst zu verhindern.

4. Vorrichtung (100) zur Durchführung des Verfahrens nach Anspruch 1, zur Herstellung einer Palette (500) mit Artikeln und/oder zum Überlappen von Paletten (500) mit Artikeln, wobei die Vorrichtung (100) zur Handhabung von Verpackungsmaterialien (211, 212, 220) konfiguriert ist, insbesondere wobei die Verpackungsmaterialien (211, 212, 220) mindestens eine Einlage-oder Trennschicht (210) und mindestens eine Basis oder Plattform (220) pro Palette (500) umfassen, wobei die Vorrichtung (100) eine Handhabungseinrichtung (150) umfasst, an der ein Greifkopf (110) angebracht ist, **dadurch gekennzeichnet, dass** der Greifkopf (110) Greif- und Auslösemittel (120) zum Anordnen eines ersten Trennelements (211), einer Basis (220) und eines zweiten Trennelements (212) in überlappender Weise, zum Entnehmen derselben aus einem oder mehreren Lagerbereichen (300) und zum gemeinsamen Transport zu einem Depotbereich (400) umfasst.

5. Vorrichtung (100) nach Anspruch 4, wobei die Greif- und Auslösemittel (120) Basisgreif- und Auslösemittel (130) umfassen.

6. Vorrichtung (100) nach einem der Ansprüche 4 bis 5, wobei die Greif- und Auslösemittel (120) Greif- und Auslösemittel (140) der Trennvorrichtung umfassen.

7. Vorrichtung (100) nach einem der Ansprüche 5 bis 6, wobei die Basisgreif- und Auslösemittel (130) vorzugsweise durch Translation zwischen einer Basisgreifposition (P) und einer Basisauslöseposition (R) beweglich sind.

8. Vorrichtung (100) nach einem der Ansprüche 5 bis 7, wobei die Basisgreif- und -Auslösemittel (130) mindestens ein Paar von Kopplungselementen (131a, 131b) umfassen, die einander gegenüberliegen und zwischen der Basisgreifposition (P), die sich einander annähert, und der Basisauslöseposition (R), die sich voneinander entfernt, beweglich sind.

9. Vorrichtung (100) nach einem der Ansprüche 6 bis 8, wobei die Greif-und Auslösemittel (140) der Trennvorrichtung eine Vielzahl von Saugelementen (141), vorzugsweise Saugnäpfen (142), umfassen.

10. Vorrichtung (100) nach einem der Ansprüche 6 bis 9, wobei die Greif- und Auslösemittel (140) der Trennvorrichtung zwischen einer Betriebsposition (O), in der sie die Trennvorrichtung (210) halten, und einer Trennposition (F), in der die Trennvorrichtung (210) vorzugsweise durch Drehung freigegeben wird, beweglich sind.

11. Vorrichtung (100) nach einem der Ansprüche 6 bis 10, wobei die Greif- und Auslösemittel (140) der Trennvorrichtung Arme (143) umfassen, an denen Saugelemente (141) mechanisch angebracht sind.

12. Vorrichtung (100) nach einem der Ansprüche 6 bis 11, wobei sich die Saugelemente (141) unterhalb der Basisgreif- und Auslösemittel (130) befinden, wenn sich die Greif- und Auslösemittel (140) in der Betriebsposition (O) befinden.

13. Vorrichtung (100) nach einem der Ansprüche 6 bis 12, wobei sich die Saugelemente (141) oberhalb der Basisgreif- und Auslösemittel (130) befinden, wenn sich die Greif-und Auslösemittel (140) der Trennvorrichtung in der Trennposition (F) befinden.

14. Vorrichtung (100) nach einem der Ansprüche 4 bis 13, wobei der Greifkopf (110) Blockierungsmittel (145) umfasst, die dazu dienen, die auf der Basis (220) angeordnete Trennschicht (210) vorzugsweise mittels Druck zu blockieren, und vorzugsweise Halteelemente (132a, 132b) umfassen, die dazu dienen, die Translation der Basis (220) relativ zu den Basisgreif- und Auslösemittel (130) zu blockieren.

15. Vorrichtung (100) nach einem der Ansprüche 4 bis 14, wobei die Handhabungseinrichtung (150), an der der Greifkopf (110) angebracht ist, so konfiguriert ist, dass sie den Greifkopf (110) zumindest vertikal anheben und horizontal verschieben kann.

## Revendications

1. Procédé de fabrication d'une palette (500) d'articles et/ou pour palettes superposées (500) d'articles, qui prévoit la manutention de matériaux d'emballage (211, 212, 220), comprenant au moins une couche d'insertion ou de séparation (210) et au moins une base ou plateforme (220) par palette (500),
ledit procédé comprenant la disposition superposée d'un premier séparateur (211), d'une base (220) et d'un deuxième séparateur (212), leur prélèvement dans une ou plusieurs zones de stockage (300) et leur manutention conjointe superposée vers une zone de dépôt (400).

2. Procédé selon la revendication 1, consistant à prendre un premier séparateur (211) dans une zone de stockage de séparateurs (310), à l'amener dans une zone de stockage de plateforme (320) et de préférence à le placer en appui sur la plateforme (220), puis à prendre ladite plateforme (220) avec ledit premier séparateur (210) et à les amener dans la zone de stockage de séparateurs (310), à prendre un deuxième séparateur (212) placé sous la plateforme (220), à transférer ledit premier séparateur superposé (211), la plateforme (220) et le deuxième séparateur (212) dans une zone de dépôt (400).

3. Procédé selon l'une quelconque des revendications précédentes, qui prévoit le blocage du premier séparateur (211) sur la plateforme (220), afin de l'empêcher de se déplacer par rapport à la plateforme (220) elle-même.

4. Appareil (100) pour la mise en œuvre du procédé selon la revendication 1, pour la confection d'une palette (500) d'articles et/ou pour le chevauchement de palettes (500) d'articles, ledit appareil (100) étant configuré pour la manutention de matériaux d'emballage (211, 212, 220), notamment lesdits matériaux d'emballage (211, 212, 220) comprenant au moins une couche d'insertion ou de séparation (210) et au moins une base ou plateforme (220) par palette (500), ledit appareil (100) comprenant un dispositif de manutention (150) sur lequel est installée une tête de préhension (110), **caractérisé en ce que** ladite tête de préhension (110) comprend des moyens de préhension et de détachement (120) pour disposer un premier séparateur (211), une base (220) et un deuxième séparateur (212) de manière superposée, les prélever d'une ou plusieurs zones de stockage (300) et les acheminer ensemble vers une zone de dépôt (400).

5. Appareil (100) selon la revendication 4, dans lequel les moyens de préhension et de détachement (120) comprennent des moyens de préhension et de détachement de base (130).

6. Appareil (100) selon l'une quelconque des revendications 4 à 5, dans lequel les moyens de préhension et de détachement (120) comprennent des moyens de préhension et de détachement de séparateur (140).

7. Appareil (100) selon l'une quelconque des revendications 5 à 6, dans lequel les moyens de préhension et de détachement de la base (130) sont mobiles entre une position de préhension de la base (P) et une position de détachement de la base (R), de préférence par translation.

8. Appareil (100) selon l'une quelconque des revendications 5 à 7, dans lequel les moyens de préhension et de détachement de la base (130) comprennent au moins une paire d'éléments de couplage (131a, 131b) opposés et mobiles entre la position de préhension de la base (P) se rapprochant l'une de l'autre et la position de détachement la base (R) s'éloignant l'une de l'autre.

9. Appareil (100) selon l'une quelconque des revendications 6 à 8, dans lequel les moyens de préhension et de détachement du séparateur (140) comprennent une pluralité d'éléments d'aspiration (141), de préférence des ventouses (142).

10. Appareil (100) selon l'une quelconque des revendications 6 à 9, dans lequel les moyens de préhension et de détachement du séparateur (140) sont mobiles entre une position de fonctionnement (O) dans laquelle ils maintiennent le séparateur (210) et une position dégagée (F) une fois que le séparateur (210) est libéré, de préférence par rotation.

11. Appareil (100) selon l'une quelconque des revendications 6 à 10, dans lequel les moyens de préhension et de détachement du séparateur (140) comprennent des bras (143) sur lesquels des éléments d'aspiration (141) sont installés mécaniquement.

12. Appareil (100) selon l'une quelconque des revendications 6 à 11, dans lequel, lorsque les moyens de préhension et de détachement du séparateur (140) sont en position de fonctionnement (O), les éléments d'aspiration (141) sont situés sous les moyens de préhension et de détachement de la base (130).

13. Appareil (100) selon l'une quelconque des revendications 6 à 12, dans lequel, lorsque les moyens de préhension et de détachement du séparateur (140) sont en position dégagée (F), les éléments d'aspiration (141) sont au-dessus des moyens de préhension et de détachement de la base (130).

14. Appareil (100) selon l'une quelconque des revendications 4 à 13, dans lequel la tête de préhension (110) comprend des moyens de blocage (145) adaptés pour bloquer la couche de séparation (210) positionnée sur la base (220), de préférence au moyen d'une pression, et comprend de préférence des éléments de maintien (132a, 132b) adaptés pour bloquer la translation de la base (220) par rapport aux moyens de préhension et de détachement de la base (130).

15. Appareil (100) selon l'une quelconque des revendications 4 à 14, dans lequel le dispositif de manutention (150) sur lequel est installée la tête de préhension (110) est configuré pour soulever au moins dans une direction verticale et déplacer dans une direction horizontale ladite tête de préhension (110).
